# EUROPEAN PATENT APPLICATION

(11) **EP 1 544 134 A1**
(43) Date of publication of application: **22.06.2005**
(21) Application number: 03104829.1
(22) Date of filing: 19.12.2003
(51) Int. Cl.: B65G 17/00, B65G 35/06

(54) **A bucket conveying machine, in particular for collating product units**

(71) Applicant: Langenpac N.V., 6604 BV Wijchen (NL)
(72) Inventor: Rovers, Theodorus Johannes Gerardus Maria, 5846 AG, Ledeacker (NL)
(74) Representative: Crump, Julian Richard John

(57) **Abstract**

A bucket conveying machine is disclosed which comprises a first working conveyor (10) having a first upstream end (20) and a second downstream end (22), said first conveyor (10) being adapted to convey a plurality of buckets (50) resting freely thereon from said first end (20) to said second end (22), a second return conveyor (60) adapted to return buckets (50) from the second end (22) of said first conveyor (10) to the first end (20) thereof, drive means for driving said first (10) and second (60) conveyors, first transfer means (26) for transferring buckets (50) from the first conveyor (10) to the second conveyor (60) at the second end (22), and second transfer means (24) for transferring buckets (50) from the second conveyor (60) to the first conveyor (10) at the first end (20).

The invention also comprehends a device for controlling the position of one or more buckets (50) on a conveyor comprising a first conveyor (10) adapted to convey a plurality of buckets (50) thereon, a second conveyor (90) provided at a station (80,120) on the first conveyor (10), said second conveyor (90) being disposed above the first conveyor (10), first transfer means for transferring buckets (50) on the first conveyor (10) on to the second conveyor (90) at the station (80,120), such that the buckets (50) are removed from the first conveyor (10), servo drive means (100) for driving the said second conveyor (90) to control the position of the buckets (50), and second transfer means for transferring buckets (50) from the second conveyor (90) back on to the first conveyor (10), or on to another conveyor.

A machine for collating product units is also disclosed which includes such a bucket conveying machine and one or more such devices for controlling the position of one or more buckets.

## Description

The present invention relates to a bucket conveying machine comprising "free" buckets for handling product units. In a "free" bucket conveying machine, a plurality of buckets which are used for receiving product units rest freely on a conveyor for said buckets such that they can be easily removed and exchanged with other buckets, for example differently sized buckets. The present invention also provides a device for controlling the position of buckets, for example at a product unit loading station, or at a bucket accumulating station. Further, the present invention provides a machine for collating product units.

EP 1094098 A1 (EBM Techniek BV) discloses a bucket conveying machine comprising a chain conveyor, and a plurality of buckets for handling product units which are adapted to be supported freely and transported by the chain conveyor. Said chain conveyor comprises an endless chain that is arranged to circulate around an endless path in a substantially horizontal plane. The chain is provided with formations adapted to engage with corresponding formations formed on each bucket. Since each bucket is freely supported by the chain conveyor, it is easy to remove the buckets for cleaning, or for exchange with differently sized buckets. However, the fact that the chain must move in a substantially horizontal plane is limiting, and has the result that the chain conveyor occupies a large "footprint".

Conveyors which operate in a substantially vertical plane are generally preferred to horizontal conveyors, because they occupy a smaller floor area. However, it would be impossible to operate the bucket conveyor of EP 1094018 A1 in such a vertical mode, since the buckets would fall off the conveyor on a return run on an underside of the conveyor.

Bucket conveyors which are adapted to operate in the vertical mode are disclosed by WO 97/11014 A1 (Langenpac NV) and EP 0316990 A1 (Vortex Systems SrL), but in these conveyors the buckets are mounted on a conveyor such that they can not fall off, and as a result they are not easily removed for cleaning or exchange with buckets of a different size.

It is an object of the present invention to provide an improved bucket conveying machine comprising "free" buckets in which a plurality of buckets are supported freely on and adapted to be transported by a conveyor.

Another object of the present invention is to provide a "free" bucket conveyor which is arranged to operate in the vertical mode, i.e. the conveyor comprises an endless belt or chain arranged for rotation in a substantially vertical plane around a closed path, whilst the bucket are freely supported by a conveyor such that they can easily be removed for cleaning or exchange with buckets of a different size.

Another object of the present invention is to provide a device for controlling the position of buckets at a product unit loading station or a bucket accumulating station, which is adapted for use with "free" buckets.

Yet another object of the present invention is to provide a product collating machine which incorporates the bucket conveying machine of the present invention.

In a first aspect of the present invention therefore, there is provided a bucket conveying machine comprising:
a first bucket conveyor that is adapted to convey a plurality of buckets resting freely thereon from said a first position to a second position;
a second return conveyor adapted to return buckets from the second position of the first conveyor to the first position thereof;
drive means for driving said first and second conveyors;
first transfer means for transferring buckets from the first conveyor to the second conveyor at the second position; and
second transfer means for transferring buckets from the second conveyor to the first conveyor at the first position.

The bucket conveying machine of the present invention therefore comprises a first bucket conveyor for transporting a plurality of buckets resting freely thereon from the first position to the second position. At the second position, the buckets are removed from the first conveyor by the first transfer means, and transferred to the second return conveyor, which is adapted to return the buckets from said second position of the first conveyor to the first position thereof. A second transfer means is provided for transferring buckets from the second conveyor to the first conveyor at said first position.

Preferably, said first conveyor comprises an endless belt which is arranged for rotation in a substantially vertical plane around a closed path, said belt having an upper run extending between said first and second positions. The bucket conveying machine of the present invention is therefore adapted to operate in a vertical mode, thereby occupying a minimal floor area. When the buckets reach the second position of the first bucket conveyor, they are transferred to the second return conveyor for return to the first position first conveyor. Advantageously, the second return conveyor also comprises an endless belt arranged for rotation in a substantially vertical plane around a closed path, such that the second return conveyor too operates in the vertical mode.

In some embodiments, the second return conveyor may be positioned in vertical alignment with the first conveyor so as to minimise the floor area occupied by the machine of the present invention. In particular, the second return conveyor may be disposed beneath the first bucket conveyor.

In some embodiments, said first position may be disposed at or towards a first end of the first conveyor. Said second position may be disposed at or towards a second end of the first conveyor. Said first end may be an upstream end in normal use, and said second end may be a downstream end.

In some embodiments, each bucket may comprise an element of magnetisable material, for example a piece of iron or steel, and the first transfer means may comprise a first magnetic transfer wheel which is adapted to pick up the buckets at the downstream end of the first conveyor, and deliver the buckets to the return conveyor.

Said second transfer means may comprise a second magnetic transfer wheel which is adapted to pick up buckets from the second conveyor and deliver the buckets to the upstream end of the first conveyor.

The first or second magnetic transfer wheel may comprise a plurality of magnetic elements, for example permanent magnets or electromagnets, which are adapted to cooperate with the magnetisable elements on the buckets to attach the buckets to the first or second magnetic transfer wheel for transfer between the first and second conveyors.

In some embodiments, the endless belt of the first conveyor may comprise a lower run, and said return conveyor may be disposed beneath said lower run, such that the buckets on the lower conveyor remain closely adjacent, or in contact with, the belt of the first conveyor.

Advantageously, means may be provided for adjusting the spacing between the lower run of the belt of the first conveyor, and the second conveyor to accommodate buckets of different sizes.

In some embodiments, means may be provided for selectively moving the second return conveyor so as to decouple it from one of said first and second transfer wheels, whilst remaining coupled with the other transfer wheel. In this way, the first and second conveyors may be operated to discharge buckets from the machine.

Thus, in a particular aspect of the present invention, said return conveyor may be selectively moveable between a first coupled position in which the return conveyor is arranged to supply buckets to the second transfer means to return them to the first conveyor, and a second decoupled position in which the second conveyor is arranged to discharge buckets from the machine.

Said drive means may comprise a reversible drive associated with the second conveyor, said reversible drive being operable in a first direction for discharging buckets from the machine, and in a second opposite direction for loading buckets onto the second conveyor.

Selectively operable positioning means may be provided for automatically positioning the second conveyor in the first or second positions.

Further, a take-off conveyor may be provided for receiving buckets from the return conveyor in the de-coupled position.

Thus, the bucket conveying machine of the present invention can easily be operated with buckets of different sizes, and the buckets can easily be removed from the machine for cleaning or exchange.

In another aspect of the present invention there is provided a device for controlling the position of one or more buckets on a conveyor, particularly at a product unit loading station, or a bucket accumulating station, of the conveyor, said device comprising;
a first conveyor adapted to convey a plurality of buckets thereon;
a second conveyor provided at a station on the first conveyor, said second conveyor being disposed above the first conveyor;
first transfer means for transferring buckets on the first conveyor on to the second conveyor at the station, such that the buckets are removed from the first conveyor;
servo drive means for driving the said second conveyor to control the position of the buckets; and
second transfer means for transferring buckets from the second conveyor back on to the first conveyor, or on to another conveyor.

In some embodiments, said second conveyor may comprise an endless belt which is positioned juxtaposed the first conveyor, said endless belt being arranged for rotation in a substantially vertical plane around a closed path, and having an upper run extending between first and second ends thereof. The upper run of the endless belt is preferably positioned above the level of the first conveyor, such that buckets transported from the first conveyor onto the second conveyor are lifted up from the first conveyor, out of contact with the first conveyor.

Means may be provided for guiding the endless belt of the second conveyor for guiding buckets from the first conveyor onto the second conveyor, and up to the level of the upper conveying run thereof. For example, the second conveyor may form a ramp up proximate the first end of the upper conveying run.

Advantageously, means may also be provided for guiding the endless belt of the second conveyor to guide buckets from the upper conveying run of the endless belt of the second conveyor back down onto the first conveyor for onward transport thereon. For example, the belt of the second conveyor may be guided to form a ramp down at the second end thereof.

Suitably, said second conveyor may be dimensioned to accommodate a predetermined number of successive buckets thereon. For example, the upper run of the second conveyor may be adapted to accommodate one or more buckets, for example two to six, typically, two, three or four buckets.

The second conveyor may comprise magnetic means adapted to attract magnetically buckets which are provided with cooperating magnetic or magnetisable means, whereby the buckets are held firmly in contact with the second conveyor when disposed thereon.

In some embodiments, each bucket may comprise a magnetisable element such, for example, as a piece or shape of iron or steel, and the second conveyor may comprise a magnetic element positioned beneath the upper run of the endless belt of the second conveyor for attracting the magnetisable means in each bucket. The magnetic element of the second conveyor may comprise a permanent magnet, for example a ferromagnet, or an electromagnet.

In some embodiments, assisting means may be provided proximate the first end of second conveyor for assisting the buckets onto the second conveyor. Advantageously said assisting means may comprise one or more assisting magnets, which may be permanent magnets or electromagnets. Said assisting magnet or magnets may be positioned generally above the first and second conveyors, and may be adapted to attract the buckets, such that proximate the first upstream end of the second conveyor, each bucket is drawn upwardly to facilitate its transfer onto the second conveyor.

Alternatively one or more air nozzles may be suitably positioned to direct the buckets onto the second conveyor.

In yet another aspect of the present invention there is provided a machine for collating product units comprising;
a plurality of buckets, each bucket being adapted to receive one or more product units;
a first bucket conveyor having a first upstream end and a second downstream end, said first conveyor being adapted to convey said buckets resting freely thereon from said first end to said second end;
a product loading station on said first conveyor intermediate said first and second ends for loading a pre-determined number of product units into each bucket from a product infeed;
an accumulating station on said first conveyor downstream of said loading station for accumulating said buckets to form groups comprising a pre-determined number of buckets;
an unloading station on said first conveyor downstream of said accumulating station for unloading product units from said groups of buckets;
a second return conveyor adapted to return empty buckets from the second end of the first conveyor to the first end thereof;
drive means for driving said first and second conveyors;
first transfer means for transferring said buckets from the first conveyor to the second conveyor at the second end; and
second transfer means for transferring said buckets from the second conveyor to the first conveyor at said first end.

Preferably the machine for collating product units in accordance with the present invention comprises a bucket conveying machine in accordance with the present invention.

Further, at least one of said product loading station and said accumulating station may comprise a device for controlling the position of the buckets in accordance with the present invention.

Suitably, said product loading station or the accumulating station may be adapted to accelerate said buckets or groups of buckets to at least the speed of the first conveyor.

In some embodiments, said unloading station may comprise a lug conveyor juxtaposed said first conveyor, said lug conveyor comprising one or more spaced abutments adapted to engage said groups of buckets, and servo drive means for controlling movement of said lug conveyor to control the movement of said groups.

In some embodiments, the lug conveyor may be adapted to run more slowly than the first conveyor. Alternatively, the lug conveyor may be adapted to run faster than the first conveyor.

Means may be provided for detecting buckets at each of said loading and accumulating stations.

Means may be provided for detecting a pre-determined maximum number of buckets at said loading station.

In some embodiments, the machine may further comprise selectively operable bucket holding means adapted to retain buckets on the second conveyor, and controlling means for automatically actuating said holding means if the maximum number of buckets is detected at said loading station.

Advantageously, the machine further comprises a plurality of different sets of buckets, the buckets of each set being suitable for use with a different respective size or shape of product unit.

Following is a description by way of example only with reference to the accompanying drawings of embodiments of the present invention.

In the drawings:
FIG. 1 is a schematic side elevation of a machine for collating product units in accordance with the present invention, showing the machine in an operating configuration (in solid lines) and in a bucket loading/unloading configuration (in phantom lines).
FIG. 2 is a schematic plan view of the machine of FIG. 1
FIG. 3 is an isometric view of an individual bucket for use with the machine of FIGS. 1 and 2
FIG. 4 is a plan view of the bucket of FIG. 3.
FIG. 5 is a side view of the bucket of FIGS. 3 and 4
FIG. 6 is schematic side view of a bucket position controlling device for use at a product loading or accumulating station forming part of the machine of FIGS. 1 and 2.
FIG. 7 is schematic isometric view of the bucket position controlling device of FIG. 6.
FIG. 8 is a plan view of the bucket position controlling device of FIGS. 6 and 7, incorporating assisting magnets instead of air nozzles.
FIG. 9 is a cross-sectional view taken on the line IX-IX of FIG. 8, showing a bucket supported on said bucket position controlling device.

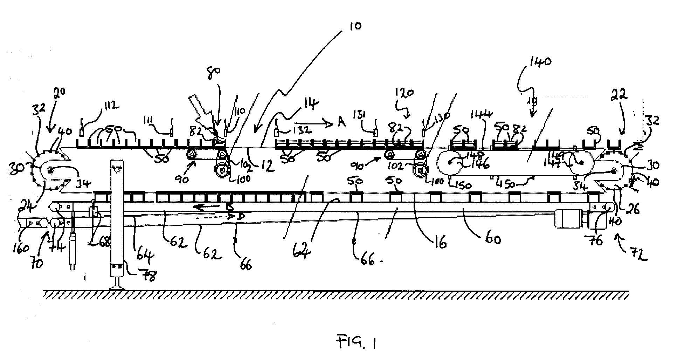

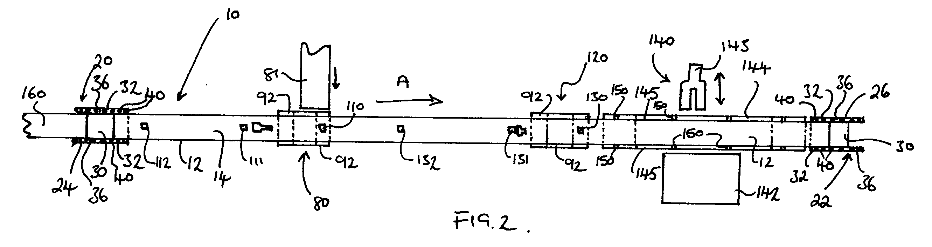

With reference to FIGS. 1 and 2, a machine for collating product units in accordance with the present invention comprises a first upper conveyor 10 comprising an endless belt 12 that is supported for rotation in a substantially vertical plane so as to define a first, substantially horizontal upper conveying run 14, and a second lower return run 16. The first upper conveyor 10 has a first upstream end 20 and a second downstream end 22.

A first upstream reversing wheel 24 is rotatably mounted to the machine juxtaposed the upstream end 20 of the first upper conveyor 10. Similarly, a second downstream reversing wheel 26 is mounted to the machine juxtaposed the second downstream end 22 of the first conveyor 10. Each of said reversing wheels 24, 26 comprises an inner cylindrical drum portion 30 and two spaced, opposing outer disk portions 32, having a diameter greater then that of the drum portion 30. The inner drum portion 30 and outer disk portions 32 are fixedly secured together for rotation about an axis 34 as a single unit. The width of the drum portion 30 in the axial direction, which extends substantially orthogonally to the longitudinal direction of the upper conveyor 10, is approximately equal to the width of the belt 12. At each end 20, 22 of the conveyor 10, the belt 12 is supported by a plurality of guide rollers (not shown) to guide the belt 12 around the drum portion 30 of the respective reversing wheel 24, 26. As best seen in FIG. 1, the maximum diameter of each reversing wheel 24, 26 is approximately equal to the spacing between the upper and lower runs 14, 16 of the belt 12, and the reversing wheels 24, 26 and guide rollers are positioned such that the disk portions 32 of the wheels 24, 26 are disposed closely adjacent a respective lateral side of the belt 12.

Each disk portion 32 of each reversing wheel 24, 26 comprises a substantially cylindrical outer surface 36 which is equipped with a plurality circumferentially spaced magnetic elements 40. Each of said magnetic elements 40 may comprise a permanent magnet or an electromagnet, with suitable means for energising the coil of each electromagnetic in use being provided.

The upper run 14 of the belt 12 is adapted to support a plurality of buckets 50 thereon, and to convey said buckets 50 from the upstream end 20 of the first conveyor 10 to the downstream end 22 thereof. (The buckets are omitted in FIG. 2 for clarity).

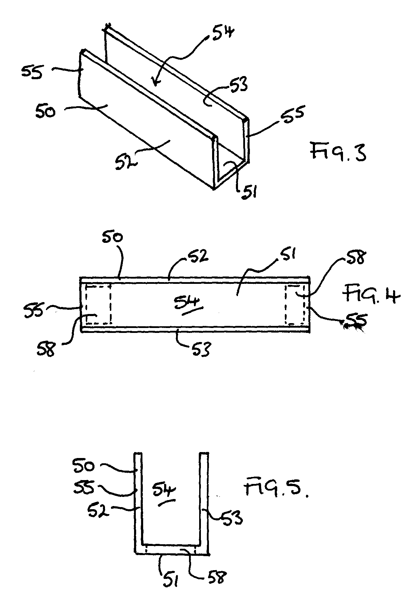

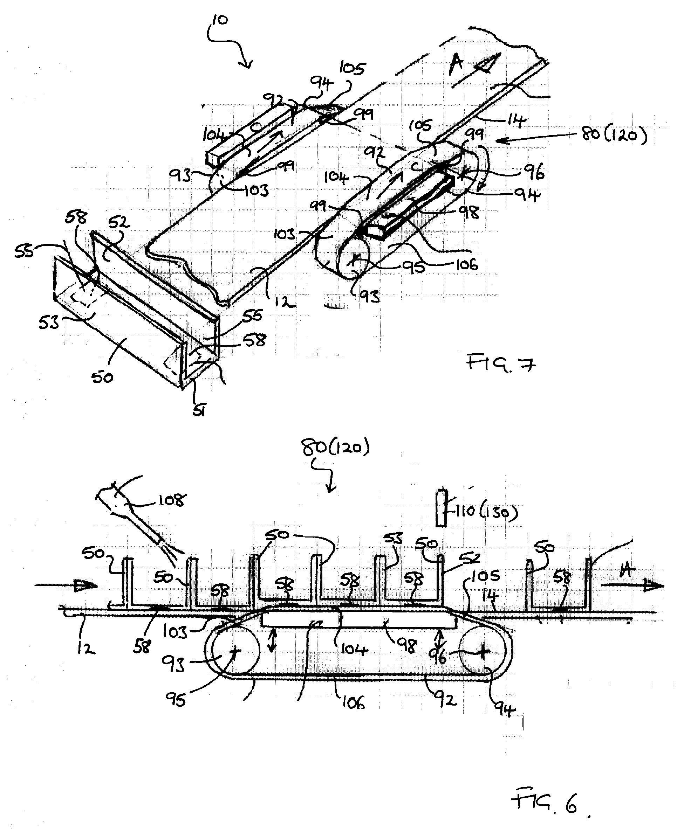

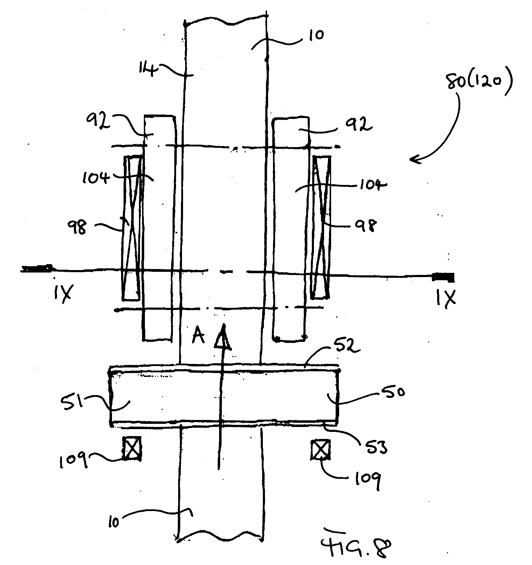

An individual bucket is shown in FIGS. 3 to 5. Each bucket 50 comprises a rectangular base 51, and upstanding front and back walls 52, 53. Suitably, the underside of each bucket 50 may be provided with a non-smooth surface which is adapted to provide sufficient fiction with the conveying surface of the belt 12 to allow the buckets 50, which rest freely on the belt 12, to be transported thereon.

The front and back walls 52, 53 and the base 51 of each bucket 50 define an interior cavity 54 that is adapted to receive one or more product units as described in more detail below. The bucket 50 has two open sides 55 which are adapted to allow product units to be inserted into, and removed from, the cavity 54. The bucket is adapted to be placed on the belt 12 of the upper conveyor 10 with its front and back walls 52, 53 disposed fore-and-aft, and the width of the bucket 50 between said open sides 55 is greater than the width of the belt 12, and is somewhat greater than the spacing between the disk portions 32 of each of the reversing wheels 24, 26. Juxtaposed each open side 55, the base 51 of the bucket 50 incorporates a respective magnetisable element 58 as shown in FIG. 4, which magnetisable elements 58 are adapted to engage the magnetic elements 40 provided on the reversing wheels 24, 26 in the manner described in more detail below.

One of the said reversing wheels 24, 26 is operatively connected to a selectively operable electric motor for driving the belt 12 around the closed path defined by the upper and lower runs 14, 16, the drum portions 30 of the reversing wheels 24, 26 and the guide rollers.

The buckets 50 are adapted to rest freely on the belt 12.

A second lower conveyor 60 is disposed directly beneath the first upper conveyor 10. The said lower conveyor 60 comprises an endless belt 62 that is supported at upstream and downstream ends 70, 72 respectively by two reversing wheels 74, 76 respectively, the terms "upstream" and "downstream" in the context of the lower conveyor 60 referring to the normal conveying direction in use of the upper conveyor 10. One of said reversing wheels 74, 76 is operatively connected to a selectively operable drive motor (not shown) for driving the belt 62 about a closed path defined by the two reversing wheels 74, 76.

As best seen in FIG. 1, the upstream reversing wheel 74 of the second lower conveyor 60 is disposed beneath the first upstream reversing wheel 24 of the first conveyor 10, and similarly the downstream reversing wheel 76 of the second conveyor 60 is disposed beneath the second downstream reversing wheel 26 of the first conveyor 10.

The belt 62 of the second lower conveyor 60 defines an upper conveying run 64, and a lower return run 66.

The second lower conveyor 60 is supported by the machine in such a manner that the spacing between the upper conveying run of the belt 62 of the lower conveyor 60 and the lower return run 16 of the belt 12 of the upper conveyor 10 can be adjusted to accommodate differently sized buckets as described below. In addition, the second lower conveyor 60 is pivoted at its second downstream end 72, and a selectively operable mechanism 78 is provided for raising and lowering the upstream end 70 of the second lower conveyor 60 between an operating configuration as shown in solid lines, and a bucket loading/unloading position as shown in phantom lines.

With the second lower conveyor disposed in the operating position, the upper and lower conveyors 10, 60 define a complete endless circuit for the buckets 50. By driving the first upper conveyor 10 in the direction of arrow A, and the second lower conveyor 60 in the direction of arrow B, buckets 50, resting freely on the upper conveying run 14 of the belt 12 of the first conveyor 10 are transported from the upstream end 20 of the upper conveyor 10 to the downstream end 22 thereof. The width of each bucket 50 between its two open sides 55 is greater than the transverse width of the belt 12 at the first conveyor 10. At the downstream end 22, the reversing wheel 26 is thus positioned to pick-up successive buckets 50 as shown in FIG. 1. The protruding lateral sides of each bucket 50 engage with respective disk portions 32 of the reversing wheel 26 and, in particular, the magnetisable elements 58 provided in the base 51 of the bucket engage with the magnetic elements 40 on the outer surface 36 of the disk portions 32, so that the bucket 50 is securely attached to the reversing wheel 26. Each bucket 50 is carried by the reversing wheel 26 at the downstream end 22 of the first conveyor 10 until it engages the lower run 16 of the upper conveyor 10, and the upper conveying run 64 of the second lower conveyor 60. The bucket 50 is then removed from the reversing wheel 26 and is carried by the upper conveying run 64 of the lower conveyor 16 in the direction of arrow B towards the upstream end 20 of the conveyor 10.

The spacing between the upper conveying run 64 of the lower conveyor 60, and the lower conveying run 16 of the upper conveyor 10 is adjusted to be substantially equal to the height of the buckets 50, so that as the buckets 50 are conveyed by the second conveyor 60, their bases 51 remain closely adjacent, or in contact with, the belt 12 of the upper conveyor 10.

The buckets 50 are thus returned by the lower conveyor 60 from the downstream end 22 of the first conveyor 10 to the upstream end 20 thereof.

At the upstream end 20 of the first conveyor 10, the reversing wheel 24 is arranged in a similar manner to the reversing wheel 26 at the downstream end 22. Specifically, the reversing wheel 24 of the upstream end 20 is arranged to pick-up buckets 50 from the lower conveyor 60, such that the laterally protruding portions of each bucket 50 engage with the disk portions 32 of the upstream reversing wheel 24, with the magnetisable elements 58 provided in the base of 51 of each bucket 50 engaging with respective magnetic elements 40 provided on the disk portions 32.

The buckets 50 are then carried successively by the upstream reversing wheel 24 to the upstream end 20 of the upper conveying run 14 of the first conveyor 10, where they are removed from the reversing wheel 24 and re-engaged with the belt 12.

With reference to FIG. 2 in particular, the product unit collating machine in accordance with the present invention comprises a product loading station 80 at a position on the upper conveying run 14 of the upper conveyor 10, somewhat downstream of the upstream end 20 of the upper conveyor 10. A product unit infeed 81 at said loading station 80 is selectively operable to supply a succession of product units 82.

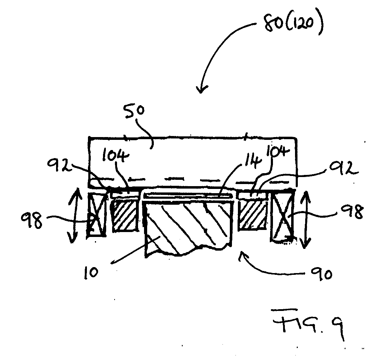

Juxtaposed the product infeed 81, the loading station 80 comprises a bucket positioning device 90 as shown in FIGS. 6 - 9.

Said bucket positioning device 90 comprises two spaced, lateral side belts 92, each of which is rotatably supported by an upstream pulley 93, and a downstream pulley 94. The upstream pulleys 93 of said two lateral side belts are mounted on a common axle 95 for simultaneous rotation, and similarly, the two downstream pulleys 94 are mounted on a common axle 96. The two lateral side belts 92 are therefore interconnected to rotate together at the same speed, and in the same direction. The pulleys 93, 94 are positioned just below the level of the upper conveying run 14 of the upper conveyor 10, and each lateral side belt 92 has an upper conveying run 104 and a lower return run 106. Suitable guides 99 such, for example, as rollers or low friction rods are positioned with respect to the upstream and downstream pulleys 93, 94, and the upper conveying run 14 of the upper conveyor 10, so as to divert the upper conveying run 104 of each lateral side band 92 above the level of the upper conveying run 14 of the belt 12 of the upper conveyor 10, and to define a ramp up 103 from the upstream pulley 93 to the upper conveying run 104, and a ramp down 105 from the upper conveying run 104 of belt 92 to downstream pulley 94.

Intermediate the upstream roller 93 and downstream roller 94 of each lateral side belt 92, the bucket position controlling device 90 comprises a magnetic bar 98. Each magnetic bar 98 may be positioned beneath the upper run 104 of its respective side belt 92, or to the side of said side belt 92 as shown in FIGS. 7 to 9. The latter position is especially preferred where high power magnets are used to attract buckets 50 supported for the time being on the upper conveying run 104, in order to avoid rubbing of the belts 92 on the magnetic bars 98 which might cause unwanted friction. In some embodiments means (not shown) may be provided for adjusting the spacing of the magnetic bars 98 from their respective upper conveying runs 104, so as to control the effective power of said bars at said upper conveying runs 104. For example, the vertical position of each magnetic bar 98 could be adjustable.

With reference to FIG. 1, the upstream pulleys 93, or the downstream pulleys 94 of the bucket positioning device 90 are drivably connected to a servo drive 100 *via* drive belt 102. Said servo drive 100 can be selectively operated to control accurately the position of the lateral sides belt 92.

As best seen in FIG. 6, the lateral side belts 92 of the bucket positioning device 90 are dimensioned to carry a pre-determined number of buckets 50 on the upper conveying run 104. In embodiment shown, the belts 92 are dimensioned to carry three buckets 50, although this number may be altered as required by shorting or lengthening the upper conveying run 104 of each lateral side belt 92.

The bucket positioning device 90 at the loading station 80 is positioned such that the leading bucket 50 on the upper conveying run 104 in the direction of travel A of the upper conveyor 10 is aligned with the product infeed 81.

A first bucket detector 110 is disposed vertically above the bucket position controlling device 90 at the loading station 80 to detect the presence of a bucket 50 at the downstream end of the upper conveying run 104 of the lateral side belts 92, in alignment with the product infeed 81. Any suitable detector known to those skilled in the art may be employed for this purpose, but, by way of example, the detector may comprise a photocell. Suitably, the photocell 110 may be aligned with the desired position of the front wall 52 of the leading bucket 50.

The first detector 110 is connected to a suitable computer control system (not shown), which computer control system is also connected to the drive motors of the upper and lower conveyors 10, 60 and the servo drive 100 of the bucket position controlling device 90 at the product loading station 80.

A second detector 111 is positioned upstream of the loading station 80 to detect the presence of at least one bucket 50 on the belt 12 immediately upstream of the bucket position controlling device 90.

A third detector 112 is positioned upstream of the second detector 111, and just downstream of the upstream end 20 of the first upper conveyor 10 to detect the presence of a predetermined maximum number of buckets 50 between the upstream end 20 of the upper conveyor 10 and the product loading station 80.

Downstream of the product loading station 80, the product collating machine in accordance with the invention comprises a bucket accumulating station 120. Said bucket accumulating station 120 comprises a bucket positioning device 90 of the kind described above for use at the product loading station 80. The servo drive 100 of the bucket positioning device 90 at the bucket accumulating station 120 is also connected to the computer control system.

The bucket accumulating station 120 comprises a first detector 130 that is positioned above the desired position of a leading bucket 50 at the accumulating station 120 in the same manner as the first detector 110 of the product loading station 80, a second detector 131 to detect the presence of a predetermined minimum number of buckets 50 on the belt 12 immediately upstream of the bucket accumulating station 120, and a third detector 132, upstream of the second sensor 131, and somewhat downstream of the product loading station 80, for detecting the presence of a pre-determined maximum buckets 50 intermediate the product loading station 80 and the bucket accumulating station 120. As before, the first, second and third detectors, 130, 131, and 132 of the bucket accumulating station 120 are connected to the computer control system.

As shown in FIGS. 1 and 2, downstream of the bucket accumulating station 120, the machine of the present invention comprises a product unloading station 140 which is adapted to remove product units from groups comprising a pre-determined number of buckets accumulated at the accumulating station 120 to be received by a different machine 142, for example a packaging or cartonning machine.

Said unloading station 140 comprises a lug conveyor 144 comprising two spaced, lateral lug belts 145. Each lug belt 145 is rotatably supported on a respective upstream roller 146, and a downstream roller 147, such that each lug belt 145 is arranged closely adjacent a respective lateral edge of the belt 12 of the upper conveyor 10 as best shown in FIG. 2.

The upstream rollers 146 of the two lug belts 145 are mounted on a common axle 148, and the two downstream rollers 147 are mounted on a common axle 149, such that the two lug belts 145 are constrained to rotate together at the same speed, and in the same direction.

Each lug belt 145 carries a plurality of spaced lugs 150, the spacing of the lugs 150 on each belt 145 being the same, and the two belts 145 being mounted on their respective upstream and downstream rollers 146, 147, such that the lugs 150 on the two lug belts 145 are aligned with one another.

One of the axles 148, 149 is drivably connected to a servo drive (not shown) for selective operation of the lug conveyor 144. The said servo drive is connected to the computer control system, and may be adapted to drive the lug belt 145 either faster or slower than the belt 12 of the first upper conveyor 10, as described in more detail below.

Juxtaposed the upstream end of the second return conveyor 60 is provided a bucket loading/unloading conveyor 160. Said bucket loading/unloading conveyor 160 is positioned at the level of the upstream end of the second conveyor 60 in the bucket loading/unloading position as shown in phantom lines in FIG. 1.

A set of buckets 50 may be loaded onto the machine of the present invention by pivoting the second lower conveyor 60 about its downstream end 72 to the bucket loading/unloading position in which the upstream end 70 of the second lower conveyor 60 is aligned with the bucket loading/unloading conveyor 160. The buckets 50 are loaded onto the bucket loading/unloading conveyor 160 in an upside-down orientation (i.e. with their bases 51 uppermost), which conveyor 160 then operated to transport the buckets 50 thereon to the second bucket conveyor 60 which is operated to drive the upper run 64 thereof in the direction of arrow D. Said bucket loading/unloading conveyor 160 and said lower return conveyor 60 are operated until all of the buckets 50 are loaded onto the second return layer 60. Operation of the bucket loading/unloading conveyor 160 and second conveyor 60 is then halted, and the mechanism 78 is operated to return the second lower conveyor 60 to its operating position. If necessary, the height of the second conveyor 60 is adjusted according to the dimensions of the buckets 50 loaded for the time being thereon, so that the bases 51 of the buckets 50 contact, or are disposed closely adjacent, the lower return run 16 of the belt 12 of the upper conveyor 10 as described above. The buckets 50 are now loaded onto the machine.

With the buckets loaded, the second return conveyor 60 is operated to move the buckets in the direction of arrow B and the first upper conveyor 10 is operated in the direction of arrow A. When a bucket 50 reaches the upstream end 70 of the lower conveyor 60 it is picked-up by the upstream reversing wheel 24, and moved to the upstream end 20 of the upper run 14 of the upper conveyor 10 as described above.

At start-up, the bucket position controlling the device 90 at the product loading station 80 is halted, so that the buckets 50 accumulate immediately upstream of the product loading station 80.

When the second and third detectors 111, 112 of the product loading station 80 detect the presence of buckets 50, a stopping device 68 provided on the second conveyor 60 juxtaposed its upstream end 70 is actuated by means of the computer control system to retain the remaining buckets 50 on the second lower conveyor, so that no buckets 50 can accumulate on the upstream reversing wheel 24.

The servo drive 100 of the bucket position controlling device 90 at the product loading station 80 is then operated slowly to drive the lateral side belts 92. As a result, the buckets 50 accumulated upstream of the product loading station are transported onto the bucket position controlling device 90, as the lateral side belts 92 engage with the laterally protruding portions at the sides of the bucket 50. Said ramp up 103 guides each bucket 50 in turn upwardly from the surface of the belt 12 on to the upper conveying run 104 of the bucket position controlling device 90. As best seen in FIGS. 6 and 9, the upper conveying run 104 of each belt 92 of the bucket position controlling device 90 is disposed above the level of the belt 12, and so buckets 50 picked-up by the bucket controlling device 90 are lifted off the belt 12, such that their positions may be controlled exclusively by the bucket position controlling device 90.

The magnetic bars 98 disposed juxtaposed the upper conveying runs 104 of the lateral side belts 92 attract the magnetisable elements 58 of the buckets 50, thereby holding the buckets 50 firmly in engagement with the lateral side belts 92 of the bucket positioning controlling device 90.

As shown in FIG. 6, an air nozzle 108 may optionally be provided to assist movement of the buckets 50 onto the lateral side belts 92 of the bucket position controlling device 90. Alternatively, or additionally, suitably positioned assisting magnets 109 of appropriate power may be employed for this purpose as shown in FIG. 9. Such assisting magnets 109 may act to draw the buckets 50 upwardly with respect to the upper conveying run 14 of the main conveyor 10, to assist in moving them onto the side belts 92 of the bucket position controlling device 90.

Since the bucket position controlling device 90 is operated more slowly than the first upper conveyor 10, successive buckets 50 remain contiguous with one another as shown in FIGS. 1 and 6 as they are loaded onto to the bucket position controlling device 90.

When the first detector 110 detects the front wall 52 of the leading bucket 50, the servo motor 100 is operated by the computer control system to halt movement of the belts 92, thus bringing the buckets on the bucket position controlling device 90 to rest.

Owing to movement of a predetermined number of buckets (in the example shown, three) onto the bucket position controlling device 90 at the product loading station 80, the number of buckets accumulated upstream of the product loading station 80 is reduced, and the third detector 112 no longer detects the presence of a bucket. As a result, the computer control system releases the stopping device 68 to allow more buckets 50 to be transported from the second return conveyor 60 the first conveyor 10 by the upstream reversing wheel 24.

At the product loading station, the product infeed device 81 is operated to deliver a predetermined number of product units 82 to the leading bucket 50 on the bucket position controlling device 90. The pre-determined number of product units to be delivered into each bucket 50 may vary according to the particular product units to be handled. But in the embodiment shown in FIG. 1, each bucket receives two product units 82. The product units are delivered into the cavity 54 of the bucket 50 *via* one of its open sides 55 in a manner known to those skilled in the art.

When the leading bucket 50 has been charged with the predetermined number of product units 82, the servo drive 100 is reactuated to move the buckets 50 on the bucket position controlling device 90 forwardly by the length of one bucket 50. The leading bucket is thus delivered back on to the belt 12 of the first upper conveyor 10, where continued movement of the belt 12 in the direction A transports the filled bucket 50 downstream towards the bucket accumulation station 120. When the front wall 52 of the next bucket 50 is detected by the first detector of 110, the bucket position controlling device 90 is halted again to allow the next bucket to be charged with product units 82. Simultaneously, the next bucket 50 immediately upstream of the product loading station 80 is transported onto the lateral side belt 92 of the bucket position controlling device 90 in the manner described above.

A succession of filled buckets 50 is therefore delivered from the product loading station 80 on to the belt 12 of the first upper conveyor 10.

At start-up the bucket position controlling device 90 at the bucket accumulating station 120 is halted, and the filled buckets dispensed by the product loading station 80 therefore accumulate contiguously immediately upstream of the bucket accumulating station 120.

When the third detector 132 above the bucket accumulating station 120 detects the presence of a pre-determined maximum number of buckets, the servo drive 100 of the bucket position controlling device at the accumulating station 120 is operated slowly to transport the pre-determined number of buckets 50 onto the lateral side belts 92 in the manner described above with reference to the product loading station 80. As before, the filled buckets 50 are lifted up from the moving belt 12 by the bucket position controlling device 90, so that the position of the buckets can be controlled exclusively by the bucket position controlling device 90. Since the lateral side belts 92 of the bucket position controlling device 90 at the bucket accumulating station 120 are driven more slowly than the moving belt 12, the pre-determined number of buckets transported onto the bucket position controlling device 90 remain contiguous with one another as shown in FIG. 6.

When a bucket 50 is detected by the detector 130, the bucket positioning device 90 is halted, and further filled buckets 50 are accumulated upstream of the accumulating station 120.

The buckets 50 are then released from the accumulating station 120 in groups comprising a pre-determined number of buckets. In the embodiment shown in FIG. 1 the buckets are released by the accumulating station 120 in groups of two buckets, although in some embodiments, each group may comprise only one bucket, or each group may comprise more than two buckets, e.g. three or four buckets. A group of buckets 50 is discharged from the accumulating station 120 by transiently operating the servo motor 100 of the bucket position controlling device 90 at the accumulating station 120 so as to drive the pre-determined number of buckets 50 forming the group downstream of the accumulating station 120 onto the moving belt 12 of the first upper conveyor 10.

An advantage of operating the lateral side belts 92 to drive the buckets of the group forwardly onto the belt 12, is that the buckets 50 may be accelerated towards the speed of the belt 12. This also applies to the bucket position controlling device 90 at the product loading station 80.

In view of the fact that filled buckets 50 are accumulated upstream of the accumulating station 120, when the pre-determined number of buckets 50 is delivered as a group from the accumulating station 120, one or more buckets are delivered onto the bucket position controlling device 90. The second detector 131 is provided to ensure that the bucket positioning device 90 at the accumulating station 120 is operated to dispense buckets 50 onto the conveyor 12 only when there are sufficient buckets upstream of the accumulating station 120 to form another group. In the embodiment shown in FIGS. 6 to 9, the bucket positioning device 90 is dimensioned to accommodate three contiguous buckets, and the buckets are dispensed as mentioned above, as mentioned above, in groups comprising two buckets 50. Accordingly, before the bucket positioning device 90 can be operated to dispense a group of two buckets, it is necessary for there to be at least one accumulated bucket 50 upstream of the accumulating station 120, so that when the bucket positioning device 90 is operated, there is a complete group of two buckets on the device 90.

If the third detector 132 detects a maximum number of buckets accumulated upstream of the accumulating station 120, then the bucket position controlling device 90 at the product loading station 80 is halted until the number of buckets accumulated upstream of the accumulating station 120 has been reduced.

Depending on the nature of the further machine 142, the lug conveyor 144 may be operated faster or slower than the belt 12 of the upper conveyor 10. Thus, a group of buckets 50 put onto the belt 12 by the bucket position controlling device 90 of the accumulating station 120 is transported on the belt 12 until it engages or is engaged by corresponding lugs 150 on the two lug belts 145. It will be appreciated that the lugs 150 are positioned to engage the laterally protruding portions of the buckets 50 which protrude beyond the lateral edges of the belt 12.

Where the lug conveyor 144 is run at a slower speed than the belt 12, then a group of buckets 50 is transported on the belt 12 until it runs up against a pair of corresponding lugs 150 as described above. Thereafter, the speed of the group of buckets 50 is controlled by the speed of the lug conveyor 144, and the moving belt 12 slides beneath the buckets 50, continuously driving the buckets up against the corresponding lugs 150 to locate the group of buckets accurately, and to ensure that the buckets 50 within the group (where there are more than one) remain contiguous to one another.

Where the lug conveyor is operated at a faster speed than the belt 12 of the upper conveyor 10, then the group of buckets 50 is engaged by a pair of lugs 150, which then drive the group of buckets 50 forwards more quickly than the belt 12 which, again, slides beneath the buckets 50, and the position of the group of buckets 50 is controlled by the speed of the lug conveyor which serves accurately to locate the group and to keep the adjacent buckets within the group in abutment with one another, as shown in FIG. 1.

In some embodiments, a pusher device 143 may be providing for pushing product units 82 from the buckets 50 in a group simultaneously into the further machine 142. Said pushing device 143 may be adapted to the transported downstream in synchronisation with the lug conveyor 144. For example, the pushing device 143 may comprise a cam follower (not shown) which is attached to a suitable conveyor and arrange to engage a shaped cam for pushing the pushing device 143 laterally into engagement with product units 82 within the buckets 50 of the group as the group and pushing device 143 are transported downstream. In such embodiments, the pushing device 143 may comprise a plurality of fmgers as shown in FIG. 2 of the kind shaped to enter into the cavities 54 of the buckets 50 of the group for pushing products units 82 disposed therein into the further machine which, as described above, may comprise a packaging or cartonning machine. Such pushing devices are well known to those skilled in the art, and need not be described further herein.

Alternatively, a "pick and place" type device may be provided for removing product units 82 from the bucket 50 of the group and placing them in the further machine which, again, may be a packaging or cartonning machine. In the case of a "pick and place" type device, the lug conveyor 144 is operated more slowly then the belt 12 such that, upon intermittently halting the lug conveyor 144, the groups of buckets 50 are immediately brought to rest such that the position of the buckets 50 is controlled, and the product units 82 can therefore be removed by the "pick and place" device for placement in the further machine 142. Again, "pick and place" type devices are well known to those skilled in the art and need not be described further therein.

In accordance with the present invention therefore all of the product units 82 contained within the bucket or buckets 50 of a group may be removed simultaneously to the further machine 142, thereby providing collation of the product units 82 into groups of pre-determined number. In the embodiment shown in FIG. 1, each group comprises four product units 82, although clearly this may be varied as desired, and may range from one product unit per group, where a group comprises a single bucket 50, and the bucket carries a single product unit 82, to sixteen or more product units, where each group comprises say four buckets 50, and each bucket 50 is adapted to receive four product units 82.

After placement in the machine 142, the empty buckets 50 are conveyed downstream by the lug conveyor 144 on the belt 12 until they are released by the corresponding lugs 150, whereafter movement of the buckets 50 is governed solely by the belt 12.

When the buckets 50 reach the downstream end 22 of the upper conveying run 14 of the upper conveyor 10, they are picked-up successively by the downstream reversing wheel 26 and moved to the downstream end 72 of the second return conveyor 60 as described above.

In operation therefore buckets 50 are continuously circulated around the circuit defined by the upper and lower conveyors 10, 60, loaded with product units 82 at the loading station 80, and accumulated at the accumulating station 120; groups of accumulated buckets 50 are released by the accumulating station 120, whereafter their movement is governed by said lug conveyor 144 in synchronism with a further device 142 and a device (e.g. pusher device 143) for removing product units 82 from the groups into the further machine 142. Operation of the accumulating station 120 to release groups of buckets 50 is linked to operation of the lug conveyor 144, such that each group of buckets engages a single pair of corresponding lugs 150 on the lug belt 145.

After use, the buckets 50 may be run-out from the machine by halting the upper conveyor 10 and lower conveyor 60, and then moving the lower conveyor 60 to its bucket loading/unloading position by operating the mechanism 78. The second lower conveyor 60 is then operated in the direction of arrow B to transport the buckets 50 to the bucket loading/unloading conveyor 160. The buckets can then be removed for cleaning and/or for exchange with another set of buckets.

If it is desired subsequently to use the machine for handling a different kind of product unit, then a different set of buckets 50 may be loaded onto the machine in the manner described above, with the spacing between the upper and lower conveyors 10, 60 being adjusted as necessary.

The product collating machine of the present invention is therefore flexible in that it can be used with different sets of buckets, the buckets being easily loaded/unloaded from the machine. Unloaded buckets can be readily cleaned for hygiene purposes.

Furthermore, since the upper and lower conveyors 10, 60 operate in the vertical mode, the "footprint" occupied by the machine is minimised.

The bucket position controlling device 90 used in the machine of the invention is particularly advantageous, in that it serves to lift the buckets 50 from the main conveying belt 12 for controlling the position of the buckets 50. When it is desired to return a bucket or group of buckets 50 to the main conveyor 12, the bucket position controlling device 90 is operated to re-accelerate the bucket or buckets 50 towards the speed of the belt 12.

## Claims

1. A bucket conveying machine comprising:
a first working conveyor having a first upstream end and a second downstream end, said first conveyor being adapted to convey a plurality of buckets resting freely thereon from said first end to said second end;
a second return conveyor adapted to return buckets from the second end of said first conveyor to the first end thereof;
drive means for driving said first and second conveyors;
first transfer means for transferring buckets from the first conveyor to the second conveyor at said second end; and
second transfer means for transferring buckets from the second conveyor to the first conveyor at said first end.

2. A bucket conveying machine as claimed in claim 1, wherein said second return conveyor is selectively movable between a coupled position in which said return conveyor is arranged to supply buckets to said second transfer means for return to the first conveyor and a second decoupled position in which said second conveyor is arranged to discharge buckets from said machine.

3. A bucket conveying machine as claimed in claim 2, wherein said drive means comprise a reversible drive associated with said second conveyor, said reversible drive being operable in a first direction for discharging buckets from the machine and a second opposite direction for loading buckets onto the second conveyor.

4. A bucket conveying machine as claimed in claim 2 or claim 3, further comprising selectively operable positioning means for automatically positioning said second conveyor in said first coupled position or said second decoupled position.

5. A bucket conveying machine as claimed in claim 2, claim 3 or claim 4, further comprising a third take-off conveyor adapted to receive buckets from the return conveyor in said decoupled position.

6. A bucket conveying machine as claimed in claim 5, wherein said third take-off conveyor is adapted to load buckets onto the return conveyor in said decoupled position.

7. A bucket conveying machine as claimed in any of claims 1 to 6, wherein said first conveyor comprises an endless belt arranged for rotation in a substantially vertical plane around a closed path, said belt having an upper conveying surface extending between said first and second ends.

8. A bucket conveying machine as claimed in claim 7, wherein said first transfer means comprises a first magnetic transfer wheel which is adapted to pick-up magnetic or magnetisable buckets at the downstream end of the first conveyor and deliver said buckets to the return conveyor.

9. A bucket conveying machine as claimed in claim 7 or claim 8, wherein said second transfer means comprises a second magnetic transfer wheel which is adapted to pick-up magnetic or magnetisable buckets from the second conveyor and deliver said buckets to the upstream end of the first conveyor.

10. A bucket conveying machine as claimed in claim 7, claim 8 or claim 9, wherein said endless belt comprises a lower run, and said return conveyor is disposed beneath said lower run such that buckets on the return conveyor remain in contact with or closely adjacent said belt.

11. A bucket conveying machine as claimed in claim 10, further comprising means for adjusting the spacing between the lower run of said belt and said second conveyor.

12. A bucket conveying machine as claimed in claim 8 or claim 9, wherein said return conveyor can be selectively tilted to decouple the return conveyor from one of said first or second transfer wheels, whilst remaining coupled with the other of the second or first transfer wheels.

13. A device for controlling the position of one or more buckets on a conveyor, particularly at a product loading station, or a bucket accumulating station, of the conveyor, said device comprising:
a first conveyor adapted to convey a plurality of buckets thereon;
a second conveyor provided at a station on the first conveyor, said second conveyor being disposed above the first conveyor;
first transfer means for transferring buckets on said first conveyor onto the second conveyor at the station, such that the buckets are removed from the first conveyor;
servo drive means for driving said second conveyor to control the position of the buckets; and
second transfer means for transferring buckets from the second conveyor back onto the first conveyor, or onto another conveyor.

14. A device as claimed in claim 13, wherein said second conveyor comprises an endless belt which is positioned juxtaposed the first conveyor, said endless belt being arranged for rotation in a substantially vertical plane around a closed path, and having an upper run extending between first and second ends thereof.

15. A device as claimed in claim 14, wherein said upper run of the endless belt is positioned above the level of the first conveyor, such that buckets transported from the first conveyor onto the second conveyor are lifted up from the first conveyor, out of contact with the first conveyor.

16. A device as claimed in claim 15, further comprising means for guiding the endless belt of the second conveyor for guiding buckets from the first conveyor onto the second conveyor, and up to the level of the upper conveying run thereof.

17. A device as claimed in claim 15 or claim 16, further comprising means for guiding the endless belt of the second conveyor to guide buckets from the upper conveying run of the endless belt of the second conveyor back down onto the first conveyor for onward transport thereon.

18. A device as claimed in any of claims 13 to 17, wherein said second conveyor is dimensioned to accommodate a pre-determined number of successive buckets thereon.

19. A device as claimed in any of claims 13 to 18, wherein said second conveyor comprises magnetic means adapted to attract magnetically buckets which are provided with cooperating magnetic or magnetisable means, whereby the buckets are held firmly in contact with the second conveyor when disposed thereon.

20. A device as claimed in claim 19, wherein each bucket comprises a magnetisable element, and the second conveyor may comprise a magnetic element positioned beneath the upper run of the endless belt of the second conveyor for attracting the magnetisable means in each bucket.

21. A bucket conveying machine for collating product units comprising:
a plurality of buckets, each bucket being adapted to receive one or more product units;
a first working conveyor having a first upstream end and a second downstream end, said first conveyor being adapted to convey said buckets resting freely thereon from said first end to said second end;
a loading station on said first conveyor intermediate said first and second ends for loading a predetermined number of product units into each bucket from a product infeed;
an accumulating station on said first conveyor downstream of said loading station for accumulating said buckets to form groups comprising a predetermined number of buckets;
an cartonning station on said first conveyor downstream of said accumulating station for unloading product units from said groups of buckets;
a second return conveyor adapted to return empty buckets from the second end of said first conveyor to the first end thereof;
drive means for driving said first and second conveyors;
first transfer means for transferring said buckets from the first conveyor to the second conveyor at said second end; and
second transfer means for transferring said buckets from the second conveyor to the first conveyor at said first end.

22. A machine as claimed in claim 21, wherein said buckets are magnetic buckets.

23. A machine as claimed in claim 21 or claim 22, wherein at least one of said product loading station and said accumulating station comprises a device for controlling the position of the buckets as claimed in any of claims 13 to 19.

24. A machine as claimed in claim 22 or claim 23, wherein said product loading station or the accumulating station is adapted to accelerate said buckets or groups of buckets to at least the speed of the first conveyor.

25. A machine as claimed in any of claims 20 to 24, wherein said cartonning station comprises a lug conveyor juxtaposed said first conveyor, said lug conveyor comprising one or more spaced abutments adapted to engage said groups of buckets, and servo drive means for controlling movement of said lug conveyor to control the spacing of said groups.

26. A machine as claimed in claim 25, wherein said lug conveyor is adapted to run more slowly than the first conveyor.

27. A machine as claimed in claim 25, wherein said lug conveyor is adapted to run faster than said first conveyor.

28. A machine as claimed in any of claims 20 to 27, further comprising means for detecting buckets at each of said loading and accumulating stations.

29. A machine as claimed in claim 28, further comprising means for detecting a predetermined maximum number of buckets at said loading station.

30. A machine as claimed in claim 29, further comprising selectively operable bucket holding means adapted to restrain buckets on said second conveyor and controlling means for automatically operating said holding means if the maximum number of buckets is detected at said loading station.

31. A machine as claimed in any of claims 20 to 30, further comprising a plurality of different sets of buckets, the buckets of each set being suitable for use with a different respective size of product unit.

32. A machine substantially as hereinbefore described with reference to and as illustrated in FIGS. 1 to 9 of the accompanying drawings.

33. A device for controlling the position of one or more buckets on a conveyor, particularly at a product loading station, or a bucket accumulating station, of the conveyor substantially as hereinbefore described with reference to and as illustrated in FIGS. 6 to 9 of the accompanying drawings.
